# FASCICULE DE BREVET EUROPEEN

(11) **EP 2 956 259 B1**
(45) Date de publication et mention de la délivrance du brevet: **17.04.2019**
(21) Numéro de dépôt: 14703886.3
(22) Date de dépôt: 12.02.2014
(51) Int. Cl.: B22F 3/105, B22F 5/00, B29C 64/153, B29C 64/40, B29D 30/06, B33Y 10/00

(54) **PIÈCE OBTENUE PAR FUSION SÉLECTIVE D'UNE POUDRE COMPRENANT UN ÉLÉMENT PRINCIPAL ET DES ÉLÉMENTS SECONDAIRES RIGIDES**
DURCH SELEKTIVES SCHMELZEN EINES PULVERS GEWONNENES TEIL MIT EINEM HAUPTELEMENT UND STARREN SEKUNDÄRELEMENTEN
PART OBTAINED BY SELECTIVE MELTING OF A POWDER COMPRISING A MAIN ELEMENT AND RIGID SECONDARY ELEMENTS

(30) Priorité: 15.02.2013 FR 1351327
(43) Date de publication de la demande: 23.12.2015
(73) Titulaire: Compagnie Générale des Etablissements Michelin, 63000 Clermont-Ferrand (FR)
(72) Inventeur: BLANCHET, Etienne, F-63040 Clermont-Ferrand Cedex 9 (FR)
(74) Mandataire: Demaure, Pierre-Yves
(86) Numéro de dépôt international: PCT/EP2014/052732
(87) Numéro de publication internationale: WO 2014/124971

(56) Documents cités:
- WO-A1-2012/131481
- WO-A2-2010/072960
- US-A- 5 595 703
- US-A1- 2009 072 447
- US-A1- 2010 042 241

## Description

### DOMAINE DE L'INVENTION

La présente invention concerne la fabrication d'éléments de moule pour la vulcanisation et le moulage de pneumatiques et plus particulièrement la fabrication d'éléments de moule obtenus par la fusion sélective d'une poudre.

### ETAT DE LA TECHNIQUE

Il est connu de réaliser un élément de moule par un procédé de fusion sélective, plus communément appelé frittage. Ce procédé utilise un faisceau énergétique pour fusionner une poudre. Par « faisceau énergétique », on entend un rayonnement électromagnétique (par exemple un faisceau laser) ou un faisceau de particules (par exemple un faisceau d'électrons).

Un procédé de frittage utilisant un laser, ci-après dénommé procédé de frittage laser, est connu du document EP1641580. Dans ce document, une première couche de poudre est étalée sur un plateau support via un organe de mise en couche. Tout ou partie des grains de la poudre de cette première couche de poudre est ensuite aggloméré par le faisceau du laser en fonction de la forme de l'objet que l'on souhaite obtenir. Une fois cette étape effectuée, une seconde couche de poudre est étalée sur la première couche de poudre pour être à son tour fusionnée sélectivement par laser. En répétant ces opérations d'étalement de couche et de fusion par laser, on construit couche par couche un objet fritté.

Le document WO2010072960 divulgue un procédé de fabrication d'un élément de moule par frittage. Dans ce procédé, on vient réaliser des éléments secondaires rigides en même temps que l'élément de moule, en vue de soutenir cet élément de moule. L'élément de moule comprend un cordon, noté 24 dans ce document, et des ailettes 26. Les éléments secondaires comprennent des parties de soutien 36 et des parties de jonctions 28. Les parties de soutien 36 ont une épaisseur correspondant sensiblement à l'épaisseur de la partie de surface de l'élément de moule qu'ils soutiennent et les parties de jonctions ont une épaisseur plus faible que ces parties de soutien de sorte qu'elles peuvent former des lignes de brisure facilitant le détachement de l'élément de moule par rapport au plateau support. Cependant, la présence de ces parties de jonction ayant une épaisseur plus faible que l'élément de moule, fait que cet élément de moule est supporté partiellement par de la poudre non frittée, lors de sa fabrication. Or les inventeurs ont constaté que pour certaines formes d'élément de moule, ce soutien partiel pouvait entraîner des problèmes dans la fabrication de cet élément de moule.

Il existe donc un besoin d'améliorer la fabrication des éléments de moule par frittage tout en optimisant l'utilisation des éléments secondaires soutenant ces éléments de moule.

### DEFINITIONS

Par « pneumatique », on entend tous les types de bandages élastiques soumis à une pression interne ou non.

Par « bande de roulement » d'un pneumatique, on entend une quantité de matériau caoutchoutique délimitée par des surfaces latérales et par deux surfaces principales dont l'une est destinée à entrer en contact avec une chaussée lorsque le pneumatique roule.

Par « moule », on entend un ensemble d'éléments de moule séparés qui, par rapprochement relatif, permettent de délimiter un espace de moulage toroïdal pour la vulcanisation et le moulage d'un pneumatique.

Par « élément de moule », on entend une partie d'un moule. Un élément de moule est par exemple une partie d'une garniture destinée à mouler des éléments en relief de la bande de roulement du pneumatique.

### RESUME DE L'INVENTION

L'invention concerne une pièce obtenue par fusion sélective d'une poudre sur un plateau support. Cette pièce comprend un élément principal formant un élément de moule pour la vulcanisation et le moulage de tout ou partie d'une bande de roulement d'un pneumatique et des éléments secondaires rigides, ces éléments secondaires soutenant l'élément principal entre une surface inférieure de cet élément principal et le plateau support. Les éléments secondaires sont destinés à être désolidarisés de l'élément principal. En outre, la surface inférieure de l'élément principal comporte une première partie de surface et au moins une seconde partie de surface. L'invention est remarquable en ce que la première partie de surface fait, avec le plateau support, un angle al inférieur à une valeur prédéterminée et la seconde partie de surface fait, avec ce plateau support, un angle α2 supérieur ou égal à cette valeur prédéterminée. Cette valeur prédéterminée est comprise entre 20° et 30°. La première partie de surface est entièrement soutenue par les éléments secondaires et la seconde partie de surface est partiellement soutenue par les éléments secondaires. La seconde partie de surface présente une aire donnée, cette seconde partie de surface est soutenue sur au plus 50% de son aire et sur au moins 20% de son aire par les éléments secondaires.

Le procédé de frittage permet de réaliser couche par couche un élément de moule pour la vulcanisation et le moulage de tout ou partie d'une bande de roulement d'un pneumatique. Dans ce procédé, une première couche de poudre est étalée sur le plateau support, et cette première couche de poudre est destinée à venir soutenir une seconde couche de poudre étalée par la suite. En fonction de la forme de la pièce à fabriquer, la première couche de poudre peut être partiellement fusionnée et des parties de surface de la seconde couche de poudre à fusionner peuvent alors être soutenues par de la poudre non fusionnée appartenant à cette première couche. Or, le soutien instable de la seconde couche de poudre par la première couche de poudre rend plus délicat la fabrication globale de l'élément principal. Une solution consisterait à prévoir des éléments secondaires supportant entièrement l'élément principal de la pièce. Cette solution est, cependant, coûteuse puisqu'elle nécessite de fusionner une grande quantité de poudre pour réaliser ces éléments secondaires, éléments qui sont ensuite mis au rebut une fois l'élément principal obtenu. Face à ce problème, les inventeurs ont constaté avec étonnement qu'il n'était pas toujours nécessaire de supporter entièrement la pièce principale par des éléments secondaires pour assurer une bonne fabrication de cette pièce principale. Plus particulièrement, les inventeurs ont remarqué que lorsque la surface inférieure de la pièce faisait avec le plateau support, un angle supérieur ou égal à un angle compris entre 20 ° et 30°, un soutien total de l'élément principal dans cette partie de surface n'était pas nécessaire et qu'un soutien partiel sur au moins 20% et au plus 50% de l'aire de la surface inférieure par les éléments secondaires était suffisant pour assurer une fabrication de qualité de l'élément principal. De cette manière, il est possible de limiter l'utilisation des éléments secondaires dans certaines configurations de l'élément principal ce qui permet de mieux rationaliser sa fabrication.

Selon la présente invention, la seconde partie de surface présentant une aire donnée, cette seconde partie de surface est soutenue sur au plus 50% de cette surface par les éléments secondaires.

Grâce à l'invention, il n'est pas nécessaire de faire supporter entièrement l'élément principal par de la poudre fusionnée. En conséquence, une partie de la poudre non fusionnée lors d'une fabrication d'un premier élément principal peut être utilisée de nouveau dans la fabrication d'un autre élément principal. On rationalise ainsi l'utilisation de la poudre.

Selon la présente invention, la seconde partie de surface est soutenue sur au moins 20% de son aire par les éléments secondaires.

Les inventeurs ont constaté qu'un minimum de soutien était nécessaire pour la fabrication de l'élément principal au niveau de sa seconde partie de surface. Ces inventeurs ont ainsi déterminé qu'il était nécessaire de venir soutenir au moins 20% de cette seconde partie de surface pour obtenir une qualité suffisante dans la fabrication de l'élément principal.

Un autre objet de l'invention concerne un procédé de conception d'une pièce obtenue par fusion sélective d'une poudre sur un plateau support. Cette pièce comprend un élément principal formant un élément de moule pour la vulcanisation et le moulage de tout ou partie d'une bande de roulement d'un pneumatique et des éléments secondaires rigides. Les éléments secondaires soutiennent l'élément principal entre une surface inférieure de cet élément principal et le plateau support. Les éléments secondaires sont destinés à être désolidarisés de l'élément principal. La surface inférieure de l'élément principal comporte au moins deux parties de surface. Le procédé de l'invention est remarquable en ce qu'il comprend une étape dans laquelle on détermine pour chaque partie de surface inférieure de l'élément principal un angle, cet angle étant formé par la partie de surface et le plateau support. Dans une autre étape, on détermine les caractéristiques de soutien de la partie de surface par les éléments secondaires en fonction de l'angle formé par cette partie de surface avec le plateau support. Dans le cas où l'angle de la partie de surface est inférieur à une valeur prédéterminée, cette partie de surface est entièrement soutenue par les éléments secondaires. Dans le cas où l'angle de la partie de surface est supérieur ou égal à cette valeur prédéterminée, cette partie de surface est partiellement soutenue sur au moins 20% et au plus 50% de son aire par les éléments secondaires, la valeur prédéterminée étant comprise entre 20° et 30°.

Le procédé de conception de l'invention prévoit ainsi une étape permettant de définir à l'avance les caractéristiques des éléments secondaires. On cherche ainsi à soutenir de manière adéquate l'élément principal tout en limitant l'utilisation d'éléments secondaires. Les caractéristiques de ces éléments secondaires sont ensuite paramétrées dans la machine qui va réaliser le frittage de la pièce, ce qui permet d'optimiser cette opération de frittage.

### BREVE DESCRIPTION DES DESSINS

D'autres caractéristiques et avantages de l'invention ressortiront de la description suivante, donnée à titre d'exemple, sans caractère limitatif, en regard des dessins annexés sur lesquels :
- la **figure 1** représente schématiquement une vue en coupe d'une pièce conforme à l'invention ;
- la **figure 2** représente schématiquement les étapes d'un procédé de conception de la pièce de la **figure 1****.**

Dans la description qui va suivre, des éléments sensiblement identiques ou similaires seront désignés par des références identiques.

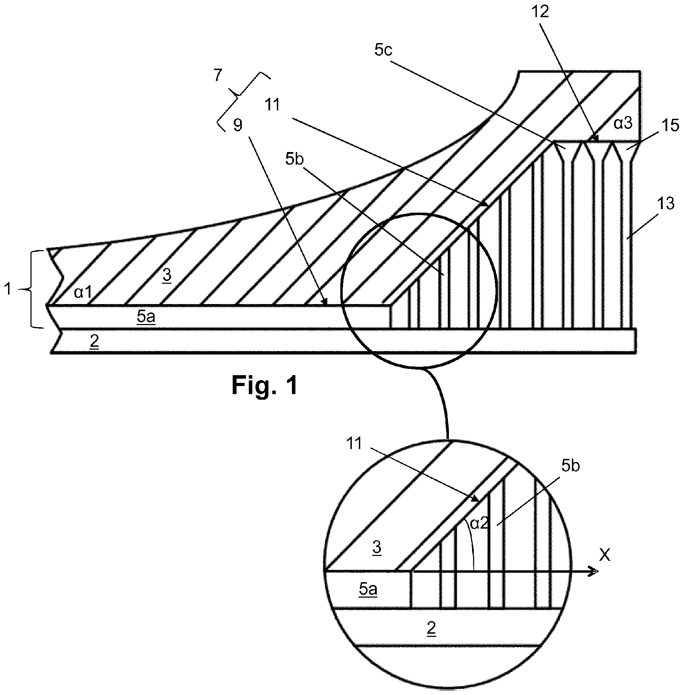

La **figure 1** présente schématiquement une vue en coupe d'une pièce 1 obtenue par fusion sélective d'une poudre sur un plateau support 2. Cette pièce 1 comprend un élément principal 3 et des éléments secondaires 5a, 5b, 5c soutenant l'élément. Cet élément principal 3 forme un élément de moule pour la vulcanisation et le moulage de tout ou partie d'une bande de roulement d'un pneumatique. Plus particulièrement, l'élément principal 3 comprend une première partie de surface 9, une seconde partie de surface 11, une troisième partie de surface 12. La première partie de surface 9 fait ici un angle al nul avec le plateau support. La seconde partie de surface 11 fait un angle α2 supérieur ou égal à 20° en valeur absolue. Préférentiellement, la seconde partie de surface 11 fait un angle α2 supérieur ou égal à 30° en valeur absolue. La troisième partie de surface 12 fait un angle α3 également nul. L'ensemble de ces parties de surface forme la surface inférieure 7 de l'élément principal. Pour chaque partie de surface, il existe des éléments secondaires associés spécifiques. Ainsi la première partie de surface 9 est soutenue entièrement par un élément secondaire 5a, présentant une section globalement rectangulaire. La seconde partie de surface 11 est soutenue partiellement par une pluralité d'éléments secondaires 5b. Ces éléments secondaires sont formés d'un corps fin. La troisième partie de surface 12 est soutenue par des éléments secondaires 5c. Ces éléments secondaires comprennent un corps 13 et une tête 15. Les têtes 15 des différents éléments secondaires 5c se rejoignent ici pour supporter entièrement la troisième partie de surface 12.

On notera que la seconde partie de surface 11 est soutenue sur au plus 50% de sa surface par les éléments secondaires 5b. De la même manière, la seconde partie de surface 11 est soutenue sur au moins 20% de sa surface par les éléments secondaires 5b.

Comme il a déjà été précisé, l'élément principal 3 et les éléments secondaires 5a, 5b, 5C sont formés par fusion sélective d'une poudre, cette poudre pouvant être une poudre métallique, minérale (céramique) ou plastique. Cette poudre peut également être un mélange de différents types de poudre.

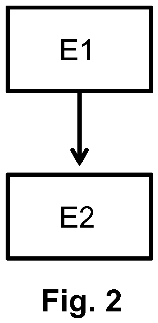

La **figure 2** représente schématiquement les étapes d'un procédé de conception de la pièce 1 de la **figure 1****.**

Le procédé comprend une première étape El dans laquelle on va déterminer pour chaque partie de surface de la surface inférieure de l'élément principal un angle, cet angle étant formé par la partie de surface avec le plateau support.

Dans une seconde étape E2 du procédé, on détermine les caractéristiques de soutien de la partie de surface par les éléments secondaires en fonction de l'angle formé par cette partie de surface avec le plateau support. Si l'angle de la partie de surface est inférieur à une valeur prédéterminée, cette partie de surface est entièrement soutenue par les éléments secondaires et si l'angle de la partie de surface est supérieur ou égal à cette valeur prédéterminée, la partie de surface est partiellement soutenue sur au moins 20% et au plus 50% de son aire par les éléments secondaires. Comme il a déjà été précisé, la valeur prédéterminée est comprise entre 20° et 30°. Par exemple, cette valeur prédéterminée est égale à 20°. En variante, cette valeur prédéterminée est égale à 30°.

Sur la **figure 1****,** les éléments secondaires 5b, 5c s'étendent dans la largeur de l'élément principal, c'est-à-dire selon une direction perpendiculaire au plan de coupe de ces figures. En variante, les éléments secondaires peuvent s'étendre dans la longueur de l'élément principal.

## Revendications

1. Pièce obtenue par fusion sélective d'une poudre sur un plateau support (2), cette pièce (1) comprenant un élément principal (3) formant un élément de moule pour la vulcanisation et le moulage de tout ou partie d'une bande de roulement d'un pneumatique et des éléments secondaires (5a, 5b, 5c) rigides, ces éléments secondaires (5a, 5b, 5c) soutenant l'élément principal (3) entre une surface inférieure (7) de cet élément principal et le plateau support (2), les éléments secondaires (5a, 5b, 5c) étant destinés à être désolidarisés de l'élément principal (3), la surface inférieure (7) de l'élément principal comportant une première partie de surface (9) et au moins une seconde partie de surface (11), **caractérisée en ce que** la première partie de surface (9) fait, avec le plateau support (2), un angle al inférieur à une valeur prédéterminée et la seconde partie de surface (11) fait, avec ce plateau support (2), un angle α2 supérieur ou égal à cette valeur prédéterminée, la valeur prédéterminée étant comprise entre 20° et 30° et **en ce que** la première partie de surface (9) est entièrement soutenue par les éléments secondaires (5a) et la seconde partie de surface (11) est partiellement soutenue par les éléments secondaires (5b) et **en ce que** la seconde partie de surface (11) présentant une aire donnée, cette seconde partie de surface (11) est soutenue sur au plus 50% de son aire par les éléments secondaires (5b) et **en ce que** la seconde partie de surface (11) est soutenue sur au moins 20% de son aire par les éléments secondaires (5b).

2. Procédé de conception d'une pièce (1) obtenue par fusion sélective d'une poudre sur un plateau support (2), cette pièce (1) comprenant un élément principal (3) formant un élément de moule pour la vulcanisation et le moulage de tout ou partie d'une bande de roulement d'un pneumatique et des éléments secondaires (5a, 5b, 5c) rigides, ces éléments secondaires soutenant l'élément principal (3) entre une surface inférieure (7) de cet élément principal et le plateau support (2), les éléments secondaires (5a, 5b, 5c) étant destinés à être désolidarisés de l'élément principal (3), la surface inférieure (7) de l'élément principal comportant au moins deux parties de surface (9, 11), le procédé de conception comprenant les étapes (E1, E2) suivantes :
- on détermine pour chaque partie de surface (9, 11) de la surface inférieure (7) de l'élément principal un angle (α1, α2), cet angle étant formé par la partie de surface (9, 11) et le plateau support (2) ;
- on détermine les caractéristiques de soutien de la partie de surface (9, 11) par les éléments secondaires (5a, 5b, 5c) en fonction de l'angle formé par cette partie de surface (9, 11) avec le plateau support (2) ;
- si l'angle de la partie de surface (9, 11) est inférieur à une valeur prédéterminée, cette partie de surface (9) est entièrement soutenue par les éléments secondaires (5a) et si l'angle de la partie de surface (9, 11) est supérieur ou égal à cette valeur prédéterminée, cette partie de surface (11) est partiellement soutenue par les éléments secondaires (5b), la valeur prédéterminée étant comprise entre 20° et 30°, la partie de surface (11) présentant une aire donnée, cette partie de surface (11) est soutenue sur au plus 50% de son aire par les éléments secondaires (5b) et la seconde partie de surface (11) est soutenue sur au moins 20% de son aire par les éléments secondaires (5b).

## Patentansprüche

1. Teil, gewonnen durch selektives Schmelzen eines Pulvers auf einer Trägerplatte (2), wobei dieses Teil (1) ein Hauptelement (3), welches ein Formelement für die Vulkanisierung und das Formen der gesamten oder eines Teils einer Lauffläche eines Reifens bildet, und starre Sekundärelemente (5a, 5b, 5c) umfasst, wobei diese Sekundärelemente (5a, 5b, 5c) das Hauptelement (3) zwischen einer unteren Fläche (7) dieses Hauptelements und der Trägerplatte (2) stützen, wobei die Sekundärelemente (5a, 5b, 5c) bestimmt sind, vom Hauptelement (3) getrennt zu sein, wobei die untere Fläche (7) des Hauptelements einen ersten Flächenteil (9) und mindestens einen zweiten Flächenteil (11) aufweist, **dadurch gekennzeichnet, dass** der erste Flächenteil (9) mit der Trägerplatte (2) einen Winkel α1 kleiner als ein vorher festgelegter Wert bildet und der zweite Flächenteil (11) mit dieser Trägerplatte (2) einen Winkel α2 größer oder gleich diesem vorher festgelegten Wert bildet, wobei der vorher festgelegte Wert zwischen 20° und 30° liegt, und dass der erste Flächenteil (9) vollständig von den Sekundärelementen (5a) gestützt wird und der zweite Flächenteil (11) teilweise von den Sekundärelementen (5b) gestützt wird und dass der zweite Flächenteil (11) einen bestimmten Bereich aufweist, wobei dieser zweite Flächenteil (11) über höchstens 50 % seines Bereichs von den Sekundärelementen (5b) gestützt wird und dass der zweite Flächenteil (11) über mindestens 20 % seines Bereichs von den Sekundärelementen (5b) gestützt wird.

2. Verfahren zum Gestalten eines Teils (1), gewonnen durch selektives Schmelzen eines Pulvers auf einer Trägerplatte (2), wobei dieses Teil (1) ein Hauptelement (3), welches ein Formelement für die Vulkanisierung und das Formen der gesamten oder eines Teils einer Lauffläche eines Reifens bildet, und starre Sekundärelemente (5a, 5b, 5c) umfasst, wobei diese Sekundärelemente das Hauptelement (3) zwischen einer unteren Fläche (7) dieses Hauptelements und der Trägerplatte (2) stützen, wobei die Sekundärelemente (5a, 5b, 5c) bestimmt sind, vom Hauptelement (3) getrennt zu sein, wobei die untere Fläche (7) des Hauptelements mindestens zwei Flächenteile (9, 11) aufweist, wobei das Gestaltungsverfahren die folgenden Schritte (E1, E2) umfasst:
- Bestimmen, für jeden Flächenteil (9, 11) der unteren Fläche (7) des Hauptelements, eines Winkels (α1, α2), wobei dieser Winkel von dem Flächenteil (9, 11) und der Trägerplatte (2) gebildet wird;
- Bestimmen der Stützmerkmale des Flächenteils (9, 11) durch die Sekundärelemente (5a, 5b, 5c) in Abhängigkeit von dem von diesem Flächenteil (9, 11) mit der Trägerplatte (2) gebildeten Winkel;
- wenn der Winkel des Flächenteils (9, 11) kleiner als ein vorher festgelegter Wert ist, wird dieser Flächenteil (9) vollständig von den Sekundärelementen (5a) gestützt, und wenn der Winkel des Flächenteils (9, 11) größer oder gleich diesem vorher festgelegten Wert ist, wird dieser Flächenteil (11) teilweise von den Sekundärelementen (5b) gestützt, wobei der vorher festgelegte Wert zwischen 20° und 30° liegt, wobei der Flächenteil (11) einen bestimmten Bereich aufweist, wobei dieser Flächenteil (11) über höchstens 50 % seines Bereichs von den Sekundärelementen (5b) gestützt wird und der zweite Flächenteil (11) über mindestens 20 % seines Bereichs von den Sekundärelementen (5b) gestützt wird.

## Claims

1. Part obtained by selective melting of a powder on a support plate (2), this part (1) comprising a main element (3) and rigid secondary elements (5a, 5b, 5c), these secondary elements (5a, 5b, 5c) supporting the main element (3) between a lower surface (7) of this main element and the support plate (2), the secondary elements (5a, 5b, 5c) being intended to be detached from the main element (3), the lower surface (7) of the main element comprising a first surface portion (9) and at least one second surface portion (11), **characterized in that** the first surface portion (9) makes, with the support plate (2), an angle α1 of less than a predetermined value, and the second surface portion (11) makes, with this support plate (2), an angle α2 greater than or equal to this predetermined value, the predetermined value being comprised between 20° and 30°, and **in that** the first surface portion (9) is entirely supported by the secondary elements (5a) and the second surface portion (11) is partially supported by the secondary elements (5b) and **in that** with the second surface portion (11) having a given surface area, this second surface portion (11) is supported over at most 50% of its surface area by the secondary elements (5b), and **in that** the second surface portion (11) is supported over at least 20% of its surface area by the secondary elements (5b).

2. Method for designing a part (1) obtained by selective melting of a powder on a support plate (2), this part (1) comprising a main element (3) and rigid secondary elements (5a, 5b, 5c), these secondary elements supporting the main element (3) between a lower surface (7) of this main element and the support plate (2), the secondary elements (5a, 5b, 5c) being intended to be detached from the main element (3), the lower surface (7) of the main element comprising at least two surfaces parts (9, 11), the design method comprising the following steps (E1, E2):
- an angle (α1, α2) is determined for each surface portion (9, 11) of the lower surface (7) of the main element, this angle being formed by the surface portion (9, 11) and the support plate (2);
- the characteristics of the support of the surface portion (9, 11) by the secondary elements (5a, 5b, 5c) is determined as a function of the angle formed by this surface portion (9, 11) with the support plate (2);
- if the angle of the surface portion (9, 11) is less than a predetermined value, this surface portion (9) is entirely supported by the secondary elements (5a) and if the angle of the surface portion (9, 11) is greater than or equal to this predetermined value, this surface portion (11) is partially supported by the secondary elements (5b), the predetermined value being comprised between 20° and 30°, with the second surface portion (11) having a given surface area, this second surface portion (11) is supported over at most 50% of its surface area by the secondary elements (5b), and in that the second surface portion (11) is supported over at least 20% of its surface area by the secondary elements (5b).
